# EUROPÄISCHE PATENTSCHRIFT

(11) **EP 0 716 802 B1**
(45) Veröffentlichungstag und Bekanntmachung des Hinweises auf die Patenterteilung: **02.02.2000**
(21) Anmeldenummer: 95118274.0
(22) Anmeldetag: 21.11.1995
(51) Int. Cl.: A01D 45/02

(54) **Einzugs- und Pflückvorrichtung für Mais**
Corn gathering and picking device
Dispositif d'introduction et de cueillage de mais

(30) Priorität: 15.12.1994 DE 9420043 U
(43) Veröffentlichungstag der Anmeldung: 19.06.1996
(73) Patentinhaber: CLAAS SAULGAU GMBH, D-88340 Saulgau (DE)
(72) Erfinder: Hegger, Josef, D-33428 Harsewinkel (DE)

(56) Entgegenhaltungen:
- EP-A- 0 378 779
- EP-A- 0 492 082
- DE-A- 4 201 067
- DE-B- 1 242 035

## Beschreibung

Die Neuerung bezieht sich auf eine Einzugs- und Pflückvorrichtung für Mais oder andere Körnerfrüchte nach dem Oberbegriff des Anspruches 1.

Einzugs- und Pflückvorrichtungen dieser Art werden beispielsweise vor Mähdreschern verwendet, und dienen dazu, Maispflanzen auf dem Feld zu ernten, wobei die Kolben gepflückt und dem Mähdrescher zugeführt werden, während die Stengel und die Blätter auf dem Feld verbleiben. Eine Maschine dieser Gattung ist z. B. in der Europäischen Patentschrift 0378 779 beschrieben. Die Aufgabe der hier gezeigten Pflück- und Gegenwalzen besteht darin, die Maisstengel in den Zwischenraum zwischen den beiden Walzenspitzen einzuführen, zu erfassen und entlang der Walzenlängen nach unten durchzuziehen, wobei die anhaftenden Maiskolben an Pflückschienen abgerissen und dem Mähdrescher zugeführt werden. Unterhalb der Walzen ist eine Schar von feststehenden Messern angeordnet, die die Maisstengel beim Durchgang durch die Walzen zerkleinern sollen.

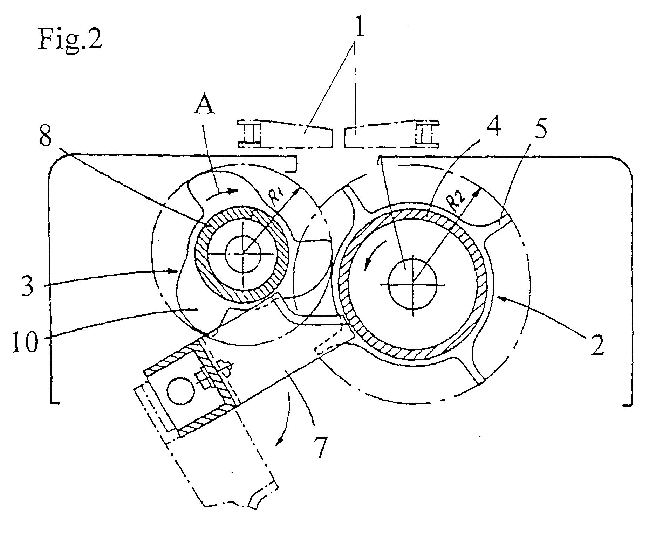

Der Erfinder des oben genannten Gegenstandes ging davon aus, daß es zweckmäß ist, die Maisstengel schon im hinteren Bereich der Walzenspitzen festzuhalten und sie schon vor dem Erreichen des ersten Messers nicht nur in Längsrichtung, sondern auch senkrecht zu der durch die beiden Walzenachsen bestimmten Ebene zu fördern. Wie in Figur 2 der genannten Patentschrift und in zwei Blättern aus einer Ersatzteilliste für ein danach gebautes Gerät (Multimaster 6 R der Fa. CLAAS in Harsewinkel) gezeigt wird, besitzen die konischen und mit Schneckengängen versehenen Walzenspitzen an ihrem Ende und noch vor dem ersten Messer fingerartige Ansätze, die dazu dienen, die Maisstengel durch die Walzenebene durchzuziehen. Dies hat die Nachteile, daß die Maisstengel schon vor dem ersten Schnitt etwas nach unten gestaucht werden und daß die Maisstengel von vorne herein in einer etwa senkrechten Lage zu der Walzenebene fixiert werden. Es wäre aber zweckmäßiger, wenn die Maisstengel in einer Schräglage durch die Walzenebene durchgezogen würden, weil dadurch die Wahrscheinlichkeit für eine kürzere Schnittlänge besteht, wenn die Maisstengel die Messerschar passieren.

An diesem Punkt setzt die Neuerung an. Durch eine Ausführung nach den kennzeichnenden Merkmalen des Anspruches 1 wird erreicht, daß die Maisstengel so weit wie möglich unten abgeschnitten werden und daß sie sich noch vor Erreichen des ersten Messers schräglegen können und in dieser Stellung auch weiterhin durch die Walzenebene durchgezogen werden.

In den Ansprüchen 2 und 3 werden dazu geeignete Mittel aufgezeigt.

Durch Maßnahmen, die mit den Ansprüchen 4 und 5 offenbart werden, wird erreicht, daß den Maisstengeln auch nach Passieren des ersten Messers Gelegenheit gegeben wird, sich weiter schrägzustellen.

Die Neuerung wird anhand von 3 Abbildungen beispielsweise erläutert.
- Figur 1: zeigt eine Pflückwalze und eine zugeordnete Gegenwalze in Draufsicht,
- Figur 2: zeigt einen Schnitt entsprechend III - III aus Figur 1
- Figur 3: zeigt ausschnittsweise eine andere Ausführung einer Pflück- und einer Gegenwalze entsprechend Figur 1

Ein an einem nicht dargestellten Mähdrescher vorgebautes Maispflückgerät besitzt mehrere Förderkettenpaare (1), die die Maisstengel einziehen. Unterhalb eines jeden Förderkettenpaares (1) sind achsparallel zueinander eine Pflückwalze (2) sowie eine Gegenwalze (3) antreibbar gelagert. Die Pflückwalze (2) besteht aus einem zylindrischen Grundkörper (4), auf den am Umfang gleichmäßig verteilt Schlagplatten (5) aufgesetzt sind. Diese sind mit Einschnitten (6) versehen, in die Messer (7) eingreifen. Eine Gegenwalze (3) ist oberhalb der Messer (7) angeordnet. Auch sie besteht aus einem zylindrischen Grundkörper (8), dem mit Zwischenräumen (9) zueinander dreiflügelige Segmente (10) aufgesetzt sind.

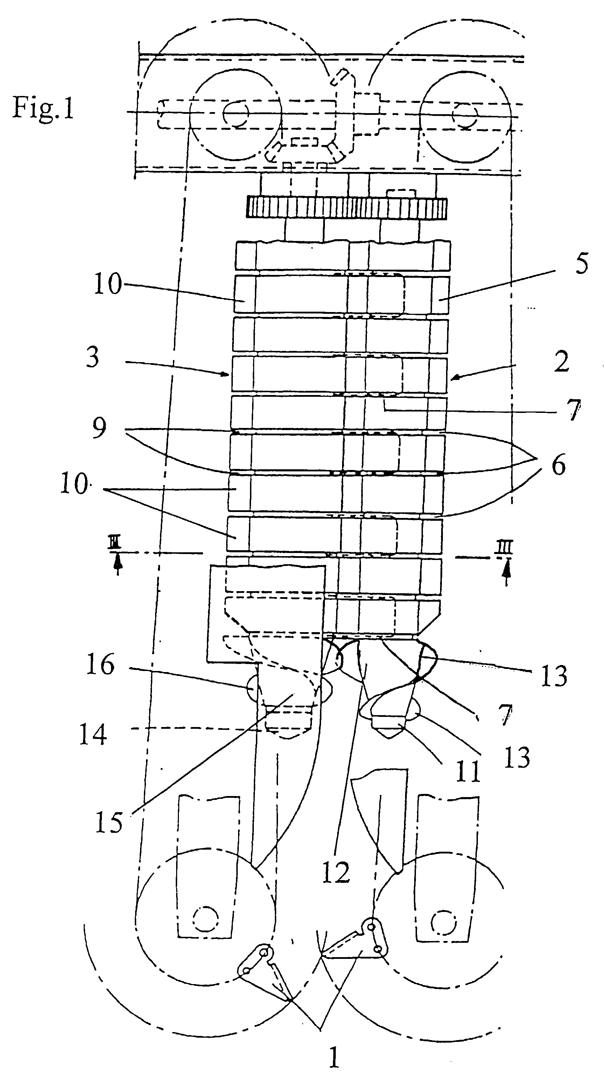

Die Pflückwalze (2) besitzt eine Walzenspitze (11), die im wesentlichen aus einem kegelförmigen Kern (12) und zwei darauf aufgesetzten Schneckengängen (13) besteht. Die Gegenwalze (3) besitzt eine andere Walzenspitze (14), die ebenfalls aus einem im wesentlichen kegelförmigen Kern (15) und darauf aufgesetzten Schneckengängen (16) besteht (Figur 1).

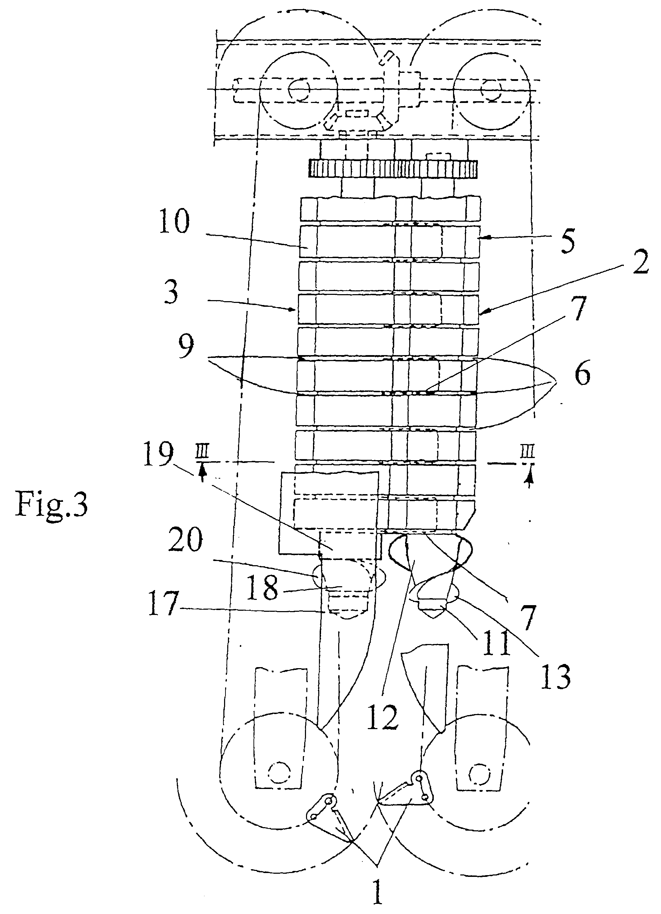

Bei einer anderen Ausführungsform (Figur 3) ist die Walzenspitze (11) der Pflückwalze (2) gleich ausgeführt, wie in Figur 1 gezeigt. Die Walzenspitze (17) der Gegenwalze (3) besitzt einen Kern mit einem kurzen kegeligen Teil (18), an den sich ein zylindrischer Teil (19) anschließt. Der kegelige Teil (18) trägt einen Schneckengang (20), während der zylindrische Teil (19) davon freibleibt.

Die in Fahrtrichtung erste Schlagplatte (5) der Pflückwalze (2) kann, wie in Figur 1 gezeigt, an der Forderseite abgeschrägt sein, um einen Freiraum für den von vorne einlaufenden Maisstengel zu bieten.

## Patentansprüche

1. Einzugs- und Pflückvorrichtung für Mais oder andere Körnerfrüchte mit mindestens einer, am Umfang mit in tangentialer Richtung wirkenden Mitnehmern versehenen Pflückwalze und einer dazu achsparallelen und gegenläufig angetriebenen und ebenfalls mit in tangentialer Richtung wirkenden Mitnehmern ausgestatteten Gegenwalze, die beide in senkrecht zu ihren Achsen liegenden Ebenen mit nutenförmigen Schlitzen versehen sind, in die von unten her eine Schar von feststehenden Messern eingreifen, sowie auf dem einzugsseitigen Ende der Pflück- und Gegenwalze vor dem ersten der feststehenden Messer angeordneten mit Förderorganen versehene Walzenspitzen,
dadurch gekennzeichnet,
daß die Förderorgane (13, 16, 20) der Walzenspitzen (11, 14, 17) der Pflück- und Gegenwalze (2, 3) in ihrem an die Pflück- und Gegenwalze (2, 3) angrenzenden rückwärtigen Bereich so zueinander beabstandet angeordnet sind, daß im wesentlichen nur eine axiale, nicht aber eine tangentiale Förderung erreicht wird.

2. Einzugs- und Fördervorrichtung nach Anspruch 1, dadurch gekennzeichnet, daß die Walzenspitzen (11, 14) mit bis nahe an das erste feststehende Messer (7) reichenden Schneckengängen (13, 16) versehen sind.

3. Einzugs- und Fördervorrichtung nach Anspruch 1, dadurch gekennzeichnet, daß nur eine (11) der Walzenspitzen mit einem bis nahe an das erste feststehende Messer (7) reichenden Schneckengang (13) versehen ist, während die andere Walzenspitze (17) nur auf einem Teil ihrer Länge mit einem Schneckengang (20) versehen ist, sonst aber vor dem ersten feststehenden Messer (7) einen zylindrischen Mantel (19) besitzt, dessen Durchmesser bis nahe an den Außendurchmesser des Schneckenganges (13) der anderen Walzenspitze (11) heranreicht.

4. Einzugs- und Fördervorrichtung nach einem der Ansprüche 1 bis 3, dadurch gekennzeichnet, daß die in tangentialer Richtung wirkenden Schlagplatten (5) der Pflückwalze (2) unmittelbar hinter dem ersten feststehenden Messer (7) derart abgeschrägt sind, daß ihre Mitnehmerwirkung im ersten Bereich abgeschwächt ist.

5. Einzugs- und Fördervorrichtung nach Anspruch 4, dadurch gekennzeichnet, daß nur ein Teil der in tangentialer Richtung wirkenden Schlagplatten (5) der Pflückwalze (2) wirkungsmindern abgeschrägt sind.

## Claims

1. An auger and picking apparatus for corn or other cereals having at least one picking drum which is provided at the periphery with entrainment members which act in the tangential direction, and a co-operating drum which is disposed in axis-parallel relationship therewith and driven in the opposite direction and also provided with entrainment members which act in the tangential direction, both of which drums are provided in planes perpendicular to the axes thereof with groove-shaped slits into which an array of fixed blades engage, and drum tips which are arranged on the entry end of the picking and co-operating drums in front of the first of the fixed blades and which are provided with conveyor members, characterised in that the conveyor members (13, 16, 20) of the drum tips (11, 14, 17) of the picking and co-operating drums (2, 3), in their rearward region adjoining the picking and co-operating drums (2, 3), are arranged in mutually spaced relationship in such a way that substantially only an axial but not a tangential conveying action is achieved.

2. An auger and conveyor apparatus according to claim 1 characterised in that the drum tips (11, 14) are provided with screw flights (13, 16) which extend to close to the first fixed blade (7).

3. An auger and conveyor apparatus according to claim 1 characterised in that only one (11) of the drum tips is provided with a screw flight (13) which extends to close to the first fixed blade (7) while the other drum tip (17) is provided with a screw flight (20) only over a part of its length but otherwise in front of the first fixed blade (7) has a cylindrical drum portion (19) whose diameter extends to close to the outside diameter of the screw flight (13) of the other drum tip (11).

4. An auger and conveyor apparatus according to one of claims 1 to 3 characterised in that the beater plates (5) of the picking drum (2), which act in the tangential direction, are bevelled immediately behind the first fixed blade (7) in such a way that their entrainment action in the first region is weakened.

5. An auger and conveyor apparatus according to claim 4 characterised in that only some of the beater plates (5) of the picking drum (2), which act in the tangential direction, are bevelled to reduce their action.

## Revendications

1. Dispositif d'introduction et de cueillage de maïs ou de céréales autres, comprenant au moins un tambour de cueillage qui est pourvu à sa périphérie, d'entraîneurs agissant dans la direction tangentielle et un contre-tambour qui est disposé parallèlement au premier, est entraîné en sens contraire de celui-ci et est également pourvu d'entraîneurs agissant dans la direction tangentielle, tous deux, dans des plans perpendiculaires à leur axe, étant munis de fentes en forme de rainures dans lesquelles un ensemble de couteaux fixes pénètre par le bas, ainsi qu'à l'extrémité côté introduction du tambour de cueillage et du contre-tambour des extrémités de tambour munies d'organes de transport, qui sont disposées devant le premier des couteaux fixes, caractérisé par le fait que les organes de transport (13, 16, 20) des extrémités (11, 14, 17) du tambour de cueillage et du contre-tambour (2, 3), dans leur partie arrière voisine desdits tambour de cueillage et contre-tambour (2, 3), sont espacés l'un par rapport à l'autre de manière à obtenir un transport essentiellement uniquement axial et pas de transport tangentiel.

2. Dispositif d'introduction et de cueillage selon la revendication 1, caractérisé par le fait que les extrémités de tambours (11, 14) sont pourvues de filets de vis (13, 16) qui s'étendent jusque dans le voisinage du premier couteau fixe (7).

3. Dispositif d'introduction et de cueillage selon la revendication 1, caractérisé par le fait que seule l'une (11) des extrémités de tambour est pourvue d'un filet de vis (13) s'étendant jusque dans le voisinage du premier couteau fixe (7), tandis que l'autre extrémité de tambour (17) est pourvue d'un filet de vis (20) sur une partie seulement de sa longueur et comporte devant le couteau (7) fixe une paroi extérieure (19) cylindrique dont le diamètre s'étend jusqu'au voisinage du diamètre extérieur du filet de vis (13) de l'autre extrémité de tambour (11).

4. Dispositif d'introduction et de cueillage selon une des revendications 1 à 3, caractérisé par le fait que les plaques formant battoir (5) du tambour de cueillage (2) agissant dans la direction tangentielle, immédiatement derrière le premier couteau (7) fixe, sont chanfreinées de telle manière que leur effet d'entraînement soit diminué dans le premier tronçon.

5. Dispositif d'introduction et de cueillage selon la revendication 4, caractérisé par le fait que seule une partie des plaques formant battoir (5) du tambour de cueillage (2) agissant dans la direction tangentielle sont chanfreinées afin de diminuer l'effet d'entraînement.
